# EUROPÄISCHE PATENTSCHRIFT

(11) **EP 2 150 709 B1**
(45) Veröffentlichungstag und Bekanntmachung des Hinweises auf die Patenterteilung: **06.07.2011**
(21) Anmeldenummer: 08749328.4
(22) Anmeldetag: 06.05.2008
(51) Int. Cl.: F16B 25/10

(54) **SPANPLATTENSCHRAUBE**
PARTICLE BOARD SCREW
VIS POUR PANNEAUX DE PARTICULES

(30) Priorität: 11.05.2007 DE 102007024223
(43) Veröffentlichungstag der Anmeldung: 10.02.2010
(73) Patentinhaber: Adolf Würth GmbH & Co. KG, 74653 Künzelsau (DE); SWG Schraubenwerk Gaisbach GmbH, 74638 Waldenburg (DE); Würth International AG, 7000 Chur (CH)
(72) Erfinder: WUNDERLICH, Andreas, 74653 Kupferzell (DE)
(74) Vertreter: Patentanwälte Ruff, Wilhelm, Beier, Dauster & Partner
(86) Internationale Anmeldenummer: PCT/EP2008/003601
(87) Internationale Veröffentlichungsnummer: WO 2008/138510

(56) Entgegenhaltungen:
- WO-A-2006/001908
- GB-A- 1 249 725
- US-A- 684 774
- US-A- 2 382 019
- US-A- 2 959 086
- US-A- 4 027 573
- US-A1- 2006 153 662

## Beschreibung

Die Erfindung betrifft eine Schraube mit einer kegelförmigen Schraubenspitze, gemäß der Merkmale aus dem Oberbegriff des Anspruchs 1 (US 4,027,573 A).

Schrauben dieser Art werden häufig auch als Spanplattenschrauben bezeichnet, da sie dazu bestimmt sind, beispielsweise in Spanplatten eingeschraubt werden. Diese Schrauben haben einen Schraubenschaft mit einem Gewinde und einem Schraubenkopf, der unterschiedlich gestaltet sein kann und der dazu dient, die Schraube mit einem Werkzeug drehanzutreiben.

Zum Einschrauben in Holz oder holzähnliches Material, beispielsweise Spanplatten, haben diese Schrauben unterschiedlich gestaltete Schraubenspitzen, teilweise auch mit richtigen Schneidkanten. Diese müssen in einem speziellen Verfahren hergestellt werden.

Bei den Schrauben mit einer kegelförmigen Schraubenspitze erstreckt sich das Schraubengewinde häufig bis in diesen Spitzenbereich hinein. Die Schraube soll einerseits in der Lage sein, ohne Vorbohren des Materials eingesetzt zu werden, und andererseits soll sie sich sehr schnell einschrauben lassen. Aus diesem Grunde ist es sinnvoll, das Schraubengewinde bis möglichst weit zum vorderen Ende der Schraubenspitze auszubilden.

Bei der Verwendung in Holz können aufgrund der Keilwirkung einer kegelförmigen Schraubenspitze Risse auftreten.

Es gibt unterschiedliche Verfahren, wie man trotz einer kegelförmigen Schraubenspitze die Spaltwirkung verhindern und das Einschrauben erleichtern kann. Eine dieser Möglichkeiten besteht darin, in der Schraubenspitze eine Schabenut einzuformen, die sich angenähert in Axialrichtung oder leicht schräg zur Axialrichtung erstreckt und die Gewindegänge in diesem Bereich unterbricht (DE 102005031534).

Bei einer weiteren bekannten Schraube (US 7393170) weist das vordere Schraubenende eine konische Spitze mit einem Gewinde auf, das beim Übergang zum Schaft endet. Daran schließt sich ein gewindefreier Bereich mit einer Schabenut an, und im weiteren Verlauf des Schafts ist wieder ein Gewinde vorhanden.

Der Erfindung liegt die Aufgabe zu Grunde, eine Schraube mit einer kegelförmigen Schraubenspitze zu schaffen, die die Spaltwirkung beim Einschrauben in Holz und gleichzeitig das Einschraubmoment der Schraube gegenüber den bisher bekannten Lösungen verringert.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die von der Erfindung vorgeschlagene Schraube enthält also eine Schulter, die zur Schraubenspitze hin gerichtet ist und die entweder den Abschluss des Schraubenschaftes bildet oder innerhalb des sich kegelförmigen verjüngenden Bereichs der Schraube angeordnet ist. Es hat sich überraschenderweise herausgestellt, dass sich mit dieser Art von Ausbildung der Schraubenspitze die Spaltwirkung der Schraube im Holz tatsächlich verringern lässt. Beim Einschrauben werden die Holzfasern in Einschraubrichtung gedrückt und reißen auseinander. Dies ist der Grund dafür, warum sich die Keilwirkung der Schraubenspitze verringert.

Als besonders sinnvoll hat es sich herausgestellt, im Bereich der Schraubenspitze eine umlaufende Rippe auszubilden, an der die Schulter ausgebildet ist.

Die Rippe erstreckt sich vorzugsweise als ununterbrochene Rippe um den gesamten Schraubenschaft herum, ist also als Ringrippe ausgebildet. Es kann jedoch ausreichen, dass sie sich nur über einen Teil des Umfangs erstreckt, also an einer oder mehreren Stellen unterbrochen ist. Mindestens deckt sie 50 % des Umgangs ab, vorzugsweise mindestens 75 %. Im folgenden wird der Ausdruck Ringrippe verwendet. Er soll aber auch den Fall umfassen, dass die Rippe unterbrochen ist.

Vorzugsweise liegt die Rippe in einer Ebene, auch wenn ein gewisses Abweichen von einer Ebene noch im Rahmen der Erfindung liegen soll. Die Ebene liegt vorzugsweise quer zur Längsachse der Schraube.

In Weiterbildung der Erfindung kann vorgesehen sein, dass die erwähnte Rippe hinter mindestens einer halben Gewindewindung des Schraubgewindes angeordnet ist, vorzugsweise hinter einer vollständigen Gewindewindung. Es soll auf diese Weise erreicht werden, dass die Schraube mit dem bis zum vorderen Ende ausgebildeten Gewinde zunächst fasst, bevor die Wirkung der Ringrippe eintritt.

Insbesondere kann vorgesehen sein, dass die Rippe in einem Abstand von mindestens zwei Dritteln bis vier Fünfteln der Länge der Schraubenspitze mit Abstand von dem vorderen Ende der Schraube angeordnet wird.

In nochmaliger Weiterbildung der Erfindung kann vorgesehen sein, dass der Außendurchmesser der Ringrippe mindestens so groß wie der Durchmesser des Schraubenschafts ist, vorzugsweise etwas größer.

Beispielsweise soll bei einer Schraube mit einem Außendurchmesser von 8 mm der Außendurchmesser der Rippe um etwa 0,5 bis 0,6 mm größer als der Kerndurchmesser der Schraube sein.

In nochmaliger Weiterbildung der Erfindung kann vorgesehen sein, dass die Ringrippe scharfkantig ausgebildet ist.

Erfindungsgemäß kann in Weiterbildung vorgesehen sein, dass die Ringrippe ein unsymmetrisches Profil aufweist, wobei vorzugsweise die Neigung der vorderen Flanke näher an einer Querebene zur Längsachse der Schraube liegt als die hintere Flanke.

Beispielsweise kann der Winkel zwischen der vorderen Flanke der Ringrippe und der Querebene im Bereich von etwa 15° liegen, während der Winkel bei der hinteren Flanke in einem Bereich von etwa 40° liegt. Maßgebend für die Wirkung der Ringrippe ist die Art der Ausbildung der vorderen Flanke, während die hintere Flanke nur dazu dient, die Ringrippe entsprechend stabil auszubilden.

Insbesondere kann vorgesehen sein, dass die Ringrippe beim Herstellen des Gewindes der Schraube in einem Arbeitsgang mit angewalzt wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfi n-dung sowie anhand der Zeichnung. Hierbei zeigen:
- Figur 1: eine Seitenansicht einer Schraube nach der Erfindung;
- Figur 2: in vergrößertem Maßstab den vorderen Bereich der Schraube mit eingezeichneten Winkeln.
- Figur 3: eine der Figur 2 entsprechende Darstellung bei einer zweiten Ausführungsform;
- Figur 4: eine der Figur 3 entsprechende Darstellung einer weiteren Aus- führungsform;
- Figur 5: eine den Figuren 2 bis 4 entsprechende Darstellung einer nochmals weiteren Ausführungsform.

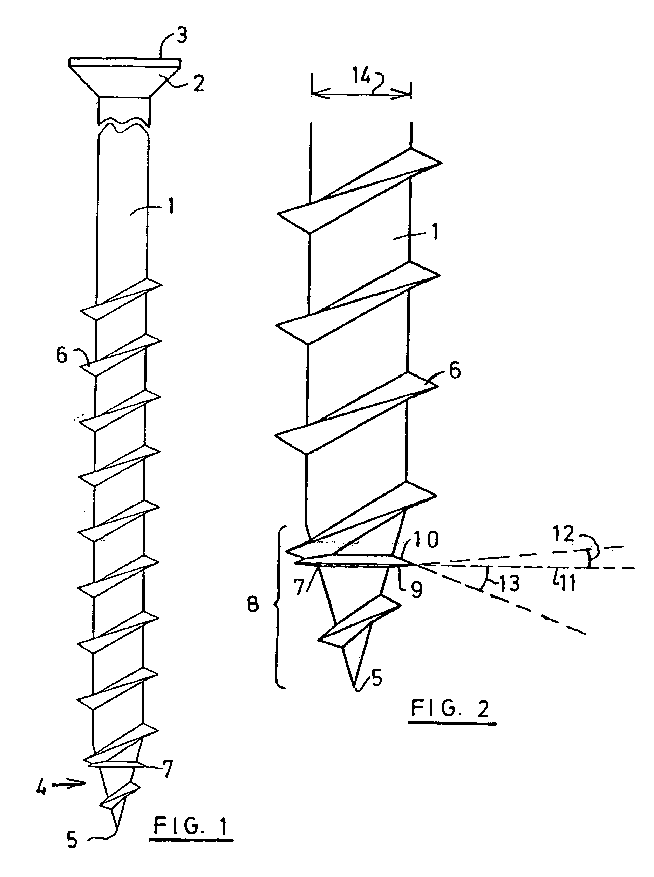

Die in Figur 1 in Seitenansicht dargestellte Spanplattenschraube enthält einen zylindrischen Schraubenschaft 1, der an seinem einen in Figur 1 oberen Ende mit einem Schraubenkopf 2 versehen ist. Im dargestellten Beispiel handelt es sich bei dem Schraubenkopf 2 um einen Senkkopf, der eine ebene Stirnfläche 3 aufweist. Von der Stirnfläche 3 aus geht eine Schraubenantriebsvertiefung in das Innere des Schraubenkopfs 2 hinein. Dies ist im einzelnen nicht dargestellt.

An dem dem Schraubenkopf 2 abgewandten gegenüberliegenden Ende der Schraube ist eine Schraubenspitze 4 gebildet, innerhalb der sich der Durchmesser des Schraubenschafts kontinuierlich verringert, bis eine vordere Spitze 5 gebildet ist.

Über den vom Schraubenkopf 2 abgewandten Teil des Schraubenschafts 1 erstreckt sich ein Gewinde 6, das sich auch über die Schraubenspitze 4 erstreckt und kurz vor, genau oder nach dem spitzen Ende 5 endet.

Innerhalb der Schraubenspitze 4 ist auf die Schraube eine Ringrippe 7 aufgewalzt, und zwar in einem Bereich zwischen dem vorderen Ende 5 der Schraubenspitze 4 und dem Beginn des zylindrischen Teils des Schraubenschafts 1.

Im dargestellten Beispiel handelt es sich bei der Ringrippe 7 um eine vollständig umlaufende Rippe.

Einzelheiten der Schraubenspitze und der Ringrippe 7 gehen aus Figur 2 hervor. Die Länge 8 der Schraubenspitze 4 wird von der Stelle aus gemessen, von der aus sich der Schraubenschaft 1 in seinem Durchmesser verringert, und reicht bis zu dem tatsächlichen Ende 5 der Schraube. In einem Bereich, der näher an dem zylindrischen Teil des Schraubenschafts 1 liegt als an der Spitze 5, ist die Ringrippe 7 angeordnet. Sie enthält eine vordere Flanke 9, also eine zu der Spitze 5 hin gerichtete Flanke. Auf der anderen Seite ist eine hintere Flanke 10 gebildet. Der Winkel 12 zwischen der Fläche der vorderen Flanke 9 und einer quer zur Schraubenlängsachse verlaufenden Ebene 11 beträgt etwa 15°. Der Winkel 13 zwischen der hinteren Flanke 10 und der erwähnten Querebene 11 beträgt etwa 40°.

Der Außendurchmesser der scharfkantigen Ringrippe 7 ist im dargestellten Beispiel etwas größer als der Durchmesser 14 des zylindrischen Teils des Schraubenschafts 1.

Die Anordnung der Ringrippe 7 ist so gewählt, dass das Gewinde 6 vor der Ringrippe 7 mindestens eine halbe, vorzugsweise eine ganze Gewindewindung aufweist, damit die Schraube in dem Holz schon gefasst hat, bevor die Wirkung der Ringrippe 7 einsetzt.

Es hat sich überraschenderweise herausgestellt, dass sich das Einschraubdrehmoment der Schraube gegenüber herkömmlichen Schraubenspitzen beachtlich verringert.

Im dargestellten Beispiel weist die Schraube einen Senkkopf auf. Selbstverständlich ist die Form und Ausbildung des Schraubenkopfs 2 hier nur als Beispiel gedacht, die von der Erfindung vorgeschlagenen Maßnahmen finden bei Schrauben mit Schraubenköpfen aller üblichen Arten Anwendung.

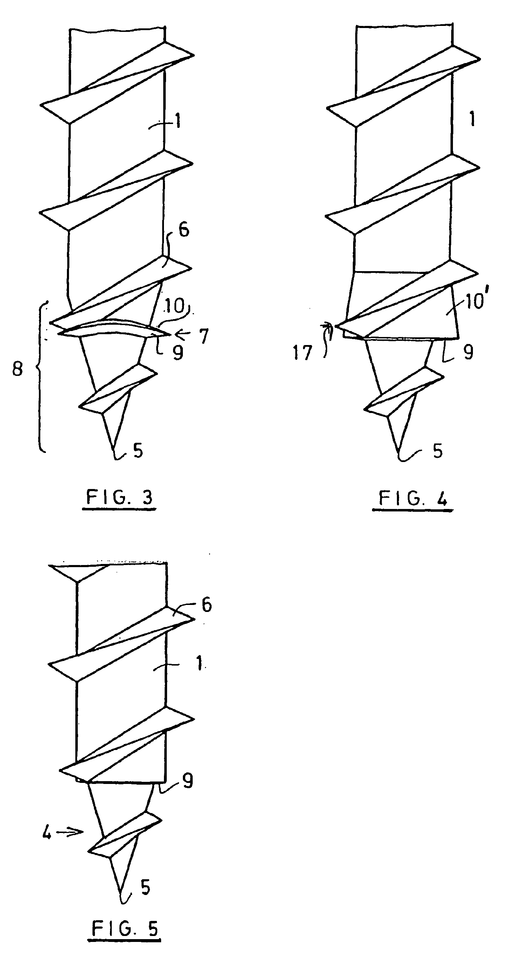

Nun zu Figur 3. Während bei der in Figur 1 und 2 dargestellten Ausführungsform die Rippe 7 als glatter Ring ausgebildet ist, zeigt die Figur 3 eine Möglichkeit, die Rippe 7 als etwas gewellten Ring auszubilden, wobei die Wellenform nur gering ausgebildet ist. Maximal sind vier Wellentäler und Wellenberge vorhanden. Diese Rippe ist etwa an der gleichen Stelle innerhalb der sich verjüngenden Schraubenspitze 4 angeordnet wie bei der vorhergehenden Ausführungsform.

Figur 4 zeigt eine Möglichkeit, wie die Rippe 17 ebenfalls ausgebildet sein kann, wobei auch hier die vordere Flanke 9 der Rippe 17 angenähert im gleichen Winkel gegenüber der Querebene geneigt ist wie bei den vorhergehenden Ausführungsformen. Auf die hintere Flanke 10' kommt es dabei weniger an.

Figur 5 zeigt eine nochmalige Weiterbildung, bei der die vordere Flanke 9 als Schulter am Ende des zylindrischen Teils des Schraubenschafts 1 ausgebildet ist. Die Schraubenspitze 4 fängt also praktisch mit einer im Durchmesser kleineren Grundfläche an als die Grundfläche des Endes des Schraubenschafts 1. Auch hier wird eine angenähert quer zur Längsachse der Schraube verlaufende Stirnfläche gebildet, die die erwähnten Vorgänge durchführt, nämlich das Zerschneiden der Holzfasern.

## Patentansprüche

1. Schraube, mit
1.1 einem Schraubenkopf (2),
1.2 einem Schraubenschaft (1),
1.3 einer mindestens angenähert kegelförmigen Schraubenspitze (4) und
1.4 einem Gewinde (6),
1.4.1 das sich bis in die Schraubenspitze (4) erstreckt, **gekennzeichnet durch**
1.5 eine um mindestens 50 % des Umfangs der Schraube herum laufenden zur Schraubenspitze hin gerichteten Schulter mindestens am Ende des Schraubenschafts (1), die
1.6 innerhalb der Schraubenspitze (4) ausgebildet und
1.7 in einer quer zur Längsachse der Schraube verlaufenden Querebene (11) angeordnet ist.

2. Schraube nach Anspruch 1, bei der die Schulter an einer von dem Gewinde unabhängigen Rippe (7, 17) innerhalb der Schraubenspitze (4) ausgebildet ist.

3. Schraube nach Anspruch 2, bei der die Rippe (7, 17) mindestens 75% des Umfangs abdeckt.

4. Schraube nach Anspruch 2, bei der die Rippe als durchgehende unterbrechungsfreie Ringrippe (7, 17) ausgebildet ist.

5. Schraube nach einem der vorhergehenden Ansprüche, bei der die Schulter bzw. die Rippe (7, 17) hinter mindestens einer halben Windung des Gewindes (6), vorzugsweise hinter einer vollständigen Windung des Gewindes (6) angeordnet ist.

6. Schraube nach einem der vorhergehenden Ansprüche, bei der die Schulter bzw. die Rippe (7, 17) in einem Abstand von mindestens zwei Dritteln bis vier Fünfteln der Länge (8) der Schraubenspitze (4) angeordnet ist.

7. Schraube nach einem der vorhergehenden Ansprüche, bei der der Außendurchmesser der Schulter bzw. der Rippe (7, 17) mindestens so groß wie der Durchmesser (14) des Schraubenschafts (1), vorzugsweise etwas größer ist.

8. Schraube nach einem der vorhergehenden Ansprüche 2 bis 7, bei der die Rippe (7, 17) scharfkantig ausgebildet ist.

9. Schraube nach einem der vorhergehenden Ansprüche 2 bis 8, bei der die Rippe (7, 17) ein unsymmetrisches Profil aufweist.

10. Schraube nach einem der vorhergehenden Ansprüche 2 bis 9, bei der die vordere Flanke (9) der Rippe (7, 17) steiler als die hintere Flanke (10) der Rippe (7, 17) ist.

11. Schraube nach einem der vorhergehenden Ansprüche, bei der der Winkel (12) zwischen der Schulter bzw. der vorderen Flanke (9) der Rippe (7, 17) und einer quer zur Längsachse verlaufenden Querebene (11) im Bereich von etwa 15° liegt.

12. Schraube nach einem der vorhergehenden Ansprüche 2 bis 10, bei der der Winkel (13) zwischen der hinteren Flanke (10) der Rippe (7) und einer quer zur Längsachse verlaufenden Querebene (11) im Bereich von etwa 40° liegt.

13. Schraube nach einem der vorhergehenden Ansprüche 2 bis 12, bei der die Rippe (7, 17) beim Aufwalzen des Gewindes (6) der Schraube mit angewalzt ist.

## Claims

1. Screw, having
1.1 a screw head (2),
1.2 a screw shank (1),
1.3 a screw tip (4) at least approximately conical and
1.4 a thread (6),
1.4.1 extending into the screw tip (4), **characterized by**
1.5 a shoulder passing around at least 50 % of the circumference of the screw and facing the screw tip at least at the end of the screw shank (1), said shoulder being
1.6 provided inside the screw tip (4) and
1.7 arranged in a transverse plane (11) running transversely to the longitudinal axis of the screw.

2. Screw according to Claim 1, wherein the shoulder is provided on a rib (7, 17) independent of the thread and inside the screw tip (4).

3. Screw according to Claim 2, wherein the rib (7, 17) covers at least 75% of the circumference.

4. Screw according to Claim 2, wherein the rib is designed as a continuous and uninterrupted annular rib (7, 17).

5. Screw according to one of the preceding claims, wherein the shoulder or rib (7, 17) is arranged behind at least one half turn of the thread (6), preferably behind a full turn of the thread (6).

6. Screw according to one of the preceding claims, wherein the shoulder or rib (7, 17) is arranged at a distance of at least two thirds to four fifths of the length (8) of the screw tip (4).

7. Screw according to one of the preceding claims, wherein the outer diameter of the shoulder or rib (7, 17) is at least as large as the diameter (14) of the screw shank (1) and preferably slightly larger.

8. Screw according to one of the preceding claims 2 to 7, wherein the rib (7, 17) is designed sharp-edged.

9. Screw according to one of the preceding claims 2 to 8, wherein the rib (7, 17) has a non-symmetrical profile.

10. Screw according to one of the preceding claims 2 to 9, wherein the front flank (9) of the rib (7, 17) is steeper than the rear flank (10) of the rib (7, 17).

11. Screw according to one of the preceding claims, wherein the angle (12) between the shoulder or front flank (9) of the rib (7, 17) and a transverse plane (11) running transversely to the longitudinal axis is in the region of around 15°.

12. Screw according to one of the preceding claims 2 to 10, wherein the angle (13) between the rear flank (10) of the rib (7) and a transverse plane (11) running transversely to the longitudinal axis is in the region of around 40°.

13. Screw according to one of the preceding claims 2 to 12, wherein the rib (7, 17) is rolled as part of the process of rolling on the thread (6) of the screw.

## Revendications

1. Vis, avec
1.1 une tête de vis (2)
1.2 une tige de vis (1)
1.3 une pointe de vis (4) au moins approximativement conique et
1.4 un filet (6)
1.4.1 qui s'étend jusque dans la pointe de vis (4), **caractérisée par**
1.5 un épaulement au moins à l'extrémité de la tige de vis (1) et entourant sur au moins 50 % le pourtour de la vis et orienté vers la pointe de vis, qui
1.6 est formé dans la pointe de vis (4) et
1.7 est situé dans un plan transversal (11) s'étendant perpendiculairement à l'axe longitudinal de la vis.

2. Vis selon la revendication 1, sur laquelle l'épaulement est formé dans la pointe de vis (4) sur une nervure (7, 17) distincte du filet.

3. Vis selon la revendication 2, sur laquelle la nervure (7, 17) couvre au moins 75 % du pourtour.

4. Vis selon la revendication 2, sur laquelle la nervure est formée comme nervure annulaire (7, 17) continue et ininterrompue.

5. Vis selon l'une des revendications précédentes, sur laquelle l'épaulement ou la nervure (7, 17) est situé(e) derrière au moins une demi-spire du filet (6), de préférence derrière une spire complète du filet (6).

6. Vis selon l'une des revendications précédentes, sur laquelle l'épaulement ou la nervure (7, 17) est situé(e) à une distance de la pointe égale à au moins deux tiers et au plus à quatre cinquièmes de la longueur (8) de la pointe de vis (4).

7. Vis selon l'une des revendications précédentes, sur laquelle le diamètre extérieur de l'épaulement ou de la nervure (7, 17) est au moins égal, de préférence quelque peu supérieur, au diamètre (14) de la tige de vis (1).

8. Vis selon l'une des revendications 2 à 7 précédentes, sur laquelle la nervure (7, 17) est formée avec une arête vive.

9. Vis selon l'une des revendications 2 à 8 précédentes, sur laquelle la nervure (7, 17) présente un profil asymétrique.

10. Vis selon l'une des revendications 2 à 9 précédentes, sur laquelle le flanc avant (9) de la nervure (7, 17) est plus incliné que le flanc arrière (10) de la nervure (7, 17).

11. Vis selon l'une des revendications précédentes, sur laquelle l'angle (12) entre l'épaulement ou le flanc avant (9) de la nervure (7, 17) et un plan transversal (11) s'étendant perpendiculairement à l'axe longitudinal se situe dans la plage d'environ 15°.

12. Vis selon l'une des revendications 2 à 10 précédentes, sur laquelle l'angle (13) entre le flanc arrière (10) de la nervure (7) et un plan transversal (11) s'étendant perpendiculairement à l'axe longitudinal se situe dans la plage d'environ 40°.

13. Vis selon l'une des revendications 2 à 12 précédentes, sur laquelle la nervure (7, 17) est laminée lors du laminage du filet (6) de la vis.
